Europäisches Patentamt

European Patent Office

Office européen des brevets

(11) Veröffentlichungsnummer: **0 319 719**
**A2**

# (12) EUROPÄISCHE PATENTANMELDUNG

(21) Anmeldenummer: 88118556.5

(22) Anmeldetag: 08.11.88

(51) Int. Cl.⁴: **B60T 8/48**

(30) Priorität: 05.12.87 DE 3741310

(43) Veröffentlichungstag der Anmeldung:
14.06.89 Patentblatt 89/24

(84) Benannte Vertragsstaaten:
**DE FR GB IT**

(71) Anmelder: **ROBERT BOSCH GMBH**
**Postfach 10 60 50**
**D-7000 Stuttgart 10(DE)**

(72) Erfinder: **Bernhardt, Wolfgang, Dipl.-Ing.**
**Tubizer Strasse 21**
**D-7015 Korntal-Münchingen(DE)**
Erfinder: **Wetzel, Gerhard**
**Seestrasse 56**
**D-7000 Stuttgart 1(DE)**

(54) **Blockierschutz- und Antriebsschlupfregelanlage.**

(57) An eine Brems- und Blockierschutzregelanlage angebundene Antriebsschlupfregelanlage ist bisher mit einer autarken Energieversorgung wie auch mit einem eine andere Energieversorgungsseite absperrenden Zuschaltventil ausgeführt.

Diese Anordnung bedeutet einen hohen Aufwand an Aggregaten. Die neue Systemanordnung reduziert diesen erheblich.

Zusätzlich zu einem Pumpenelement (6; 6a) und einer ersten Ventilanordnung (7; 7a, 7b) vor einem Radbremszylinder (4; 4a) wird eine zweite Ventilanordnung (6; 6a) in dem Bremskreis vorgesehen, die durch eine mit dem Mehrkreishauptzylinder (2) verbundene Leitung (15; 15a) umgehbar ist, welche zum Radbremszylinder (5; 5a) des nicht angetriebenen Rades führt und über eine dritte Ventilanordnung (17a, 17b; 18a, 18b) mit der Eingangsseite (20; 20a) eines Pumpenelementes (14; 14a) verbunden ist, deren Ausgangsseite (13; 13a) an der Bremsleitung (3; 3a) des angetriebenen Rades liegt.

FIG. 1

## Blockierschutz- und Antriebsschlupfregelanlage

### Stand der Technik

Die Erfindung geht aus von einer Blockierschutz- und Antriebsschlupfregelanlage nach der Gattung des Hauptanspruchs. Eine derartige Blockierschutz- und Antriebsschlupfregelanlage ist bekannt (DE-OS 32 15 739).

Bei dieser bekannten Blockierschutz- und Antriebsschlupfregelanlage wird die Bremsleitung zwischen einem Mehrkreishauptzylinder und mindestens einem Radbremszylinder durch eine Abzweigung zu der Eingangsseite einer selbstansaugenden Pumpe so lange geöffnet, bis ein in die Abzweigung gesetztes und über eine Drucksteuerung arbeitendes Umschaltventil die Verbindung zur Pumpeneingangsseite unterbricht.

Es kann davon ausgegangen werden, daß eine große Anzahl von Bremsbetätigungen innerhalb des Druckbereichs ausgeführt werden, in denen das vom Bremsdruck gesteuerte Umschaltventil noch keine Abtrennung zwischen Pumpeneingang und Bremskreis vorgenommen hat, wobei ein bestimmter Anteil eines Druckmittels in die Eingangsleitung des Pumpenelements und in das Pumpenelement hineingebracht wird, was sich nachteilig auf das einem Mehrkreishauptzylinder zuzuordnende Druckmittelvolumen wie auch auf die Baugröße des Hauptzylinders auswirkt.

### Vorteile der Erfindung

Die erfindungsgemäße Blockierschutz- und Antriebsschlupfregelanlage mit den kennzeichnenden Merkmalen des Hauptanspruchs hat demgegenüber den Vorteil einer einfachen Ausgestaltung und geringeren Anzahl der Einzelaggregate, die in der Verbindung zwischen einem Mehrkreishauptzylinder und mindestens einem Radbremszylinder keine zusätzliche Volumenaufnahme bewirken. Als weiterer Vorteil ist anzusehen, daß kein zusätzliches an die Bremsleitung zwischen Mehrkreishauptzylinder und Radbremszylindern angeschlossenes Umschaltventil mit bestimmter Schließ- und Öffnungsfunktion angebracht ist.

Durch die in den Unteransprüchen aufgeführten Maßnahmen sind vorteilhafte Weiterbildungen und Verbesserungen der im Hauptanspruch angegebenen Blockierschutz- und Antriebsschlupfregelanlage möglich.

Besonders vorteilhaft ist die Verwendung von 2 2-Ventilen, die wirtschaftlich herzustellen und zugleich für den Blockierschutz- und Antriebsschlupfregelfall einzusetzen sind.

Die Merkmale der Ansprüche 6 und 10 lassen eine besonders einfache Regelung im Antriebsschlupfregelfall zu, wozu ein 2/2-Ventil während der Druckhalte- und Druckabbauphase getaktet ansteuerbar ist.

### Zeichnung

Ausführungsbeispiele der Erfindung sind in der Zeichnung dargestellt und in der nachfolgenden Beschreibung näher erläutert. Es zeigen Figur 1 ein erstes Ausführungsbeispiel einer erfindungsgemäß ausgestalteten Blockierschutz- und Antriebsschlupfregelanlage, Figur 2 ein zweites Ausführungsbeispiel einer erfindungsgemäß ausgestalteten Blockierschutz- und Antriebsschlupfregelanlage, Figur 3 ein drittes Ausführungsbeispiel einer erfindungsgemäß ausgestalteten Blockierschutz- und Antriebsschlupfregelanlage in teilweiser Darstellung.

### Beschreibung der Ausführungsbeispiele

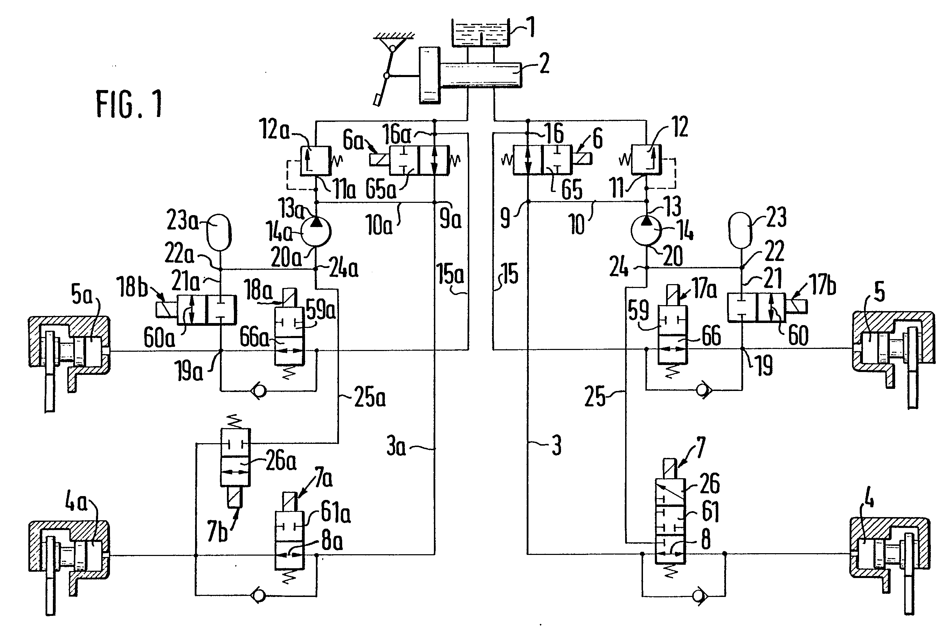

Eine Blockierschutz- und Antriebsschlupfregelanlage für Fahrzeuge nach Figur 1 hat einen Nachfüllbehälter 1 für Bremsflüssigkeit und einen Mehrkreishauptzylinder 2 bekannter Bauart. Von diesem nehmen von je einem anderen Bremskreisraum Bremsleitungen 3; 3a für je einen anderen Bremskreis ihren Ausgang, von denen jeweils eine zu einem antriebsschlupfgeregelten Radbremszylinder 4; 4a und einem nicht antriebsschlupfgeregelten Radbremszylinder 5; 5a führt.

Von Mehrkreishauptzylinder 2 führt je eine der Bremsleitungen 3; 3a zu je einer elektromagnetisch betätigbaren zweiten Ventilanordnung 6; 6a und von dort zu je einer elektromagnetisch betätigbaren ersten Ventilanordnung 7; 7a, 7b die in je einer Durchgangsstellung 8; 8a eine Verbindung zu je einem einer Antriebsachse zugeordneten Radbremszylinder 4; 4a für je ein Rad herstellt. Die erste Ventilanordnung kann durch ein 3/3-Ventil oder zwei 2/2-Ventile 7a, 7b gebildet werden.

Zwischen zweiter Ventilanordnung 6; 6a und erster Ventilanordnung 7; 7a, 7b ist an jeder Bremsleitung 3; 3a ein Einspeispunkt 9; 9a vorgesehen, mit dem über ein Leitungsteil 10; 10a eine Verbindung zu der Eingangsseite 11; 11a eines Überdruckventils 12; 12a und zu der Ausgangsseite 13; 13a eines Pumpenelements 14; 14a besteht.

Eine jeweils die zweite Ventilanordnung 6; 6a umgehende Leitung 15; 15a zweigt von jeder Bremsleitung 3; 3a zwischen dem Mehrkreishauptzylinder 2 und jeder zweiten Ventilanordnung 6; 6a an je einer Leitungsverbindung 16; 16a ab und stellt eine Verbindung über je ein Ventil 17a; 18a einer elektromagnetisch betätigbaren dritten Ventilanordnung 17a, 17b; 18a, 18b zu je einem Radbremszylinder 5; 5a je eines nicht angetriebenen Rades her.

Ein anderes Ventil 17b; 18b jeder dritten Ventilanordnung ist in einer von einer Leitungsverbindung 19; 19a an der Leitung 15; 15a zwischen dem einen Ventil 17a; 18a und dem Radbremszylinder 5; 5a abzweigenden und zu der Eingangsseite 20; 20a des Pumpenelements 14; 14a führenden Leitung 21; 21a angeordnet. In dieser Leitung 21; 21a sind je eine Leitungsverbindung 22; 22a zu je einem Druckmittelspeicher 23; 23a und je eine weitere Leitungsverbindung 24; 24a vorgesehen, die an einem Leitungsabschnitt 25; 25a liegt, der von jeder ersten Ventilanordnung 7; 7a, 7b zur Eingangsseite 20; 20a jedes Pumpenelements 14; 14a führt und in den während des Druckabbaus an einem Radbremszylinder 4; 4a eines angetriebenen Rades in einer Ventilstellung 26; 26a die erste Ventilanordnung 7; 7a, 7b öffnet.

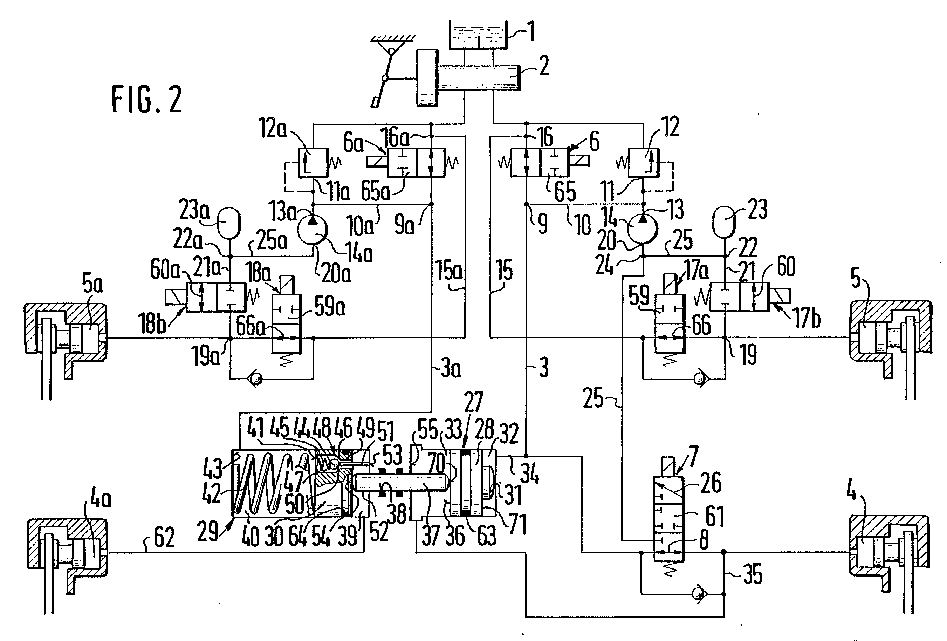

Bei dem Ausführungsbeispiel nach Figur 2 werden für gleiche und gleichwirkende Bauteile dieselben Bezugszeichen wie beim ersten Ausführungsbeispiele nach Figur 1 verwendet.

In der Figur 2 wird die dem Radbremszylinder 4a eines Antriebsrades zugeordnete erste Ventilanordnung eines Bremskreises durch eine Zylinderanordnung aus einem ersten Zylinder 27 sowie einem ersten Kolben 28 und einem zweiten Zylinder 20 sowie einem zweiten Kolben 30 gebildet. Der erste Zylinder 27 wird von dem ersten Kolben 28, der an einem Anschlag 31 anliegen kann, in einen ersten Zylinderraum 32 und einen zweiten Zylinderraum 33 abgetrennt, wobei der erste Zylinderraum 32 über eine Abzweigung 34 mit der Bremsleitung 3 des anderen Bremskreises zwischen der ersten Ventilanordnung 7 des angetriebenen Rades und der zweiten Ventilanordnung 6 in Verbindung steht. Der zweite Zylinderraum 33 ist über eine Abzweigung 35 ebenfalls mit der Bremsleitung 3 des anderen Bremskreises zwischem dem einem Antriebsrad zugeordneten Radbremszylinder 4 und der ersten Ventilanordnung 7 angeschlossen. An der dem zweiten Zylinderraum 33 zugewandten Seite 36 des Kolbens 28 greift ein Stift 37 an, der über eine in einem Gehäuse angebrachte Führung 38 in einen ersten Zylinderraum 39 des zweiten Zylinders 29 hineinragt und den zweiten Kolben 30 berührt, der den zweiten Zylinder 29 in den ersten Zylinderraum 39 und einem zweiten Zylinderraum 40 unterteilt. Der zweite Zylinderraum 40 hat eine Verbindung mit der Bremsleitung 3a des Bremskreises und nimmt eine den zweiten Kolben 30 an einer Federstützfläche 41 in Richtung zum Stift 37 hin beaufschlagende Druckfeder 42 auf, die sich anderenends an der Zylinderraumstirnseite 43 abstützt. Über ein Aufstoßventil 44, 45, 46 ist eine Verbindung vom zweiten Zylinderraum 40 zum ersten Zylinderraum 39 gegeben, von dem ein Bremsleitungsabschnitt 62 zum Radbremszylinder 4a führt. Dieses Aufstoßventil 44, 45, 46 ist in dem zweiten Kolben 30 anordbar in einer Zylinderbohrung 47 mit einer anschließenden, als Ventilsitz dienenden konischen Bohrung 48 und einer Führungsbohrung 49, wobei ein als Kugelteil ausgebildetes Ventilschließelement 44 im Schließfall von einer sich in der Zylinderbohrung 47 abstützenden Druckfeder 45 gegen den in der konischen Bohrung 48 sich befindenden Ventilsitz 46 bewegt wird. Über einen vorgegebenen Schließweg (Hub) 50 und die Führungsbohrung 49 wird ein mit dem Ventilschließelement 44 in Richtung des ersten Zylinderraumes 39 verbundener Stößel 51 in den ersten Zylinderraum 39 geleitet. Die in diesen ersten Zylinderraum 39 hineinragende Länge des Stößels 51 hängt von einer vom Stift 37 erzeugten Distanzlänge 52 zwischen der Zylinderraumstirnseite 53 des ersten Zylinderraums 39 und einer dieser zugewandten Stirnseite 54 des zweiten Kolbens 30 ab. Der Stößel 51 kann sich andererseits an der Zylinderraumstirnseite 53 abstützen. Das Aufstoßventil 44, 45, 46 kann auch in nicht dargestellter Weise in einer Leitung außerhalb des zweiten Kolbens 30 angebracht sein. Die Ausdehnung des zweiten Zylinderraums 40 zwischen der Federstützfläche 41 am zweiten Kolben 30 und der Zylinderraumstirnseite 43 ist in Abhängigkeit von einem bestimmten im ersten Zylinderraum 39 unterzubringenden Druckmittelvolumenanteil und einer von dem Regelbetrieb abhängigen Charakteristik der Druckfeder 42 sowie weiterhin von dem von der Zylinderraumstirnseite 55 begrenzten Weg des ersten Kolbens 28 in Richtung des zweiten Zylinders 29 hin vorbestimmt.

Im Antriebsschlupfregelfall sind die zweiten Ventilanordnungen 6; 6a jedes Bremskreises getaktet ansteuerbar, so daß die Kolben 28, 30 ihre gerade eingenommene Position im wesentlichen beibehalten.

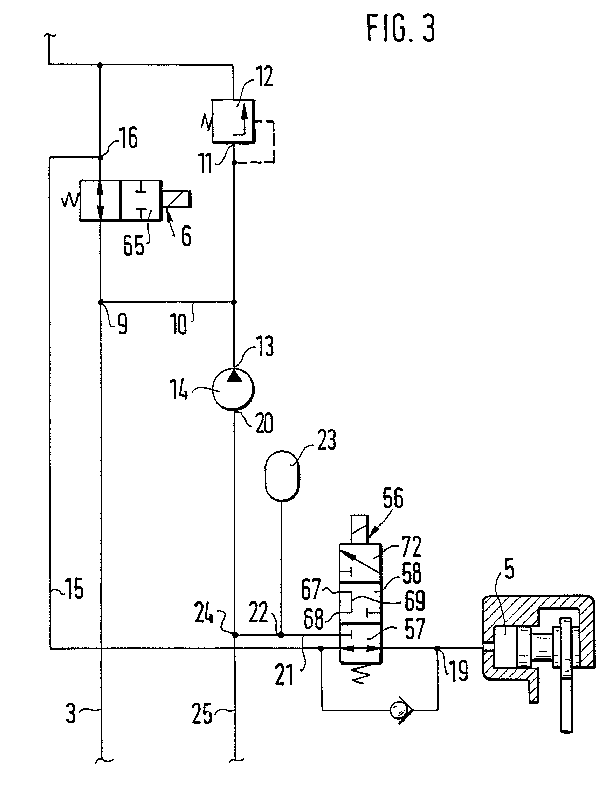

Bei dem Ausführungsbeispiel nach Figur 3, bei dem wieder die gleichen Bezugszeichen für gleichwirkende Bauteile wie bei den bisherigen Ausführungsbeispielen nach den Figuren 1 und 2 verwendet werden, wird im Gegensatz zu den bisherigen Ausführungsbeispielen die einem nicht angetriebenen Rad zugeordnete dritte Ventilanordnung 56 als 3/3-Ventil ausgebildet. Die dritte Ventilanordnung 56 verbindet in einer Ventilstellung "Druckaufbau" die Leitung 15 mit dem Radbremszylinder 5, in einer Ventilstellung "Druckhalten" 58 wird die Verbindung zum Radbremszylinder 5 unterbrochen und eine Verbindung der Leitung 15 zur Eingangsseite 20 des Pumpenelements 14 geöffnet und in einer weiteren Ventilstellung "Druckabbau" 72 wird eine Verbindung vom Radbremszylinder 5 zur Eingangsseite 20 des Pumpenelements 14 geöffnet.

Die Wirkungsweise der gewöhnlichen Bremsanlage bleibt bei einem Bremsvorgang unbeeinflußt von einer bestimmten Ventilanordnung wie auch von der Anordnung eines Pumpenelements in der Gesamtanlage. Neigt eines der Räder oder neigen mehrere Räder zusammen zum Blockieren, so geben in bekannter Weise an den Rädern angeordnete Sensoren Signale an ein elektronisches Steuergerät. durch das dann die entsprechenden Ventilanordnungen 7; 7a, 7b; 17a, 17b; 18a, 18b; 56 elektromagnetisch angesteuert und in eine zweite Stellung "Druckhalten" oder in eine dritte Stellung "Druckabbau" geschaltet werden, wodurch sich eine bestimmte Druckmodulation in den Radbremszylindern 4, 4a; 5, 5a ergibt. Mit der Ventilerregung wird auch das Pumpenelement 14; 14a eingeschaltet, um die Radbremszylinder von der überschüssigen Druckmittelmenge entlasten zu können. Im Falle des Radbremszylinders 5 schaltet während des "Druckhaltens" das eine Ventil 17a in eine Schließstellung 59 und das andere Ventil 17b verweilt in seiner Schließstellung. Das Pumpenelement 14 kann dabei aus dem Druckmittelspeicher 23 ein bestimmtes Druckmittelvolumen entnehmen und über seine Ausgangsseite 13 in den Leitungsteil 10 fördern.

Muß danach der Druck in dem Radbremszylinder 5 reduziert werden, wird das andere Ventil 17b in eine Durchgangsstellung 60 geschaltet und das Pumpenelement 14 kann das für den Radbremszylinder 5 überschüssig gewordene Druckmittelvolumen aus der Leitung 21 entnehmen.

Ist eine Anwendung der dritten Ventilanordnung 56 aus Figur 3 gegeben, so wird sie während des "Druckhaltens" in die Stellung 58 geschaltet. Dabei kann es Pumpenelement 14 bei getakteter zweiter Ventilanordnung 6 in den Leitungen 10, 3, 15, 21 das Druckmittel rundum fördern, wobei die Beeinflussung des Bremsdruckes im Mehrkreishauptzylinder 2 gering bleibt. Der Druckabbau im Radbremszylinder 5 wird mit der Ventilstellung "Druckabbau" 72 der dritten Ventilanordnung 56 erreicht.

In der Figur 2 ist eine Anordnung gezeigt, die an einem Radbremszylinder der angetriebenen Räder eine der elektromagnetischen Ventilanordnungen einspart.

Hier kann bei einer erforderlich gewordenen Regelung des Radbremszylinders 4a in dem einen Bremskreis die Ventilanordnung 7 des anderen Bremskreises in die Ventilstellung "Druckhalten" 61 gebracht werden. Dabei wirkt der im Mehrkreishauptzylinder 2 erzeugte Druck im ersten Zylinderraum 32 des ersten Zylinders 27, während in dem zweiten Zylinderraum 33 durch die Verbindung mit dem Radbremszylinder 4 kein Bremsdruck mehr aufgebaut werden kann. Der erste Kolben 28 erhält dadurch in Richtung des zweiten Kolbens 30 ein Kraftübergewicht und beide setzen sich mit dem Stift 37 in Bewegung, wobei der Stößel 51 mit dem Ventilschließelement 44 zunächst in seiner Lage an der Zylinderstirnseite 53 verbleibt. In den beiden Zylinderräumen 39, 40 des zweiten Zylinders 29 ist bei einer Abbremsung des einen Antriebsrads über den zugeordneten Radbremszylinder 4a, von geringen Verlusten abgesehen, der gleiche Bremsdruck bis zum Schließpunkt des Aufstoßventils 44, 45, 46 vorhanden. Der Schließpunkt wird nach einem festzulegenden Schließweg (Hub) 50 vorgegeben. Danach stehen die beiden Kolben 28, 30 durch einen gleichwertigen Druck in dem ersten Zylinderraum 32 und im zweiten Zylinderraum 40 und einem anderen gleichwertigen druck in dem zweiten Zylinderraum 33 in dem ersten Zylinderraum 39 im Kräftegleichgewicht und lassen nur über den Umschaltvorgang der ersten Ventilanordnung 7 eine weitere Bewegung in Richtung der Zylinderraumstirnseite 43 des zweiten Zylinders 29 zu, wobei dem Radbremszylinder 4 Druckmittel entnommen wird und in dem Radbremszylinder 4a durch eine Volumenvergrößerung des ersten Zylinderraums 39, der sich über den Bremsleitungsabschnitt 62 bis zum Radbremszylinder 4a erstreckt, Druck abgebaut werden kann. Um eine gute Abtrennung der ersten Zylinderräume 32, 39 zu den zweiten Zylinderräumen 33, 40 mit den unterschiedlich sich einstellenden Drücken zu erreichen, sind Dichtelemente 63, 64 in einer bestimmten Anordnung, vorzugsweise an den Kolben, anbringbar. Die Wahl der Federkraftcharakteristik der Druckfeder 42 wird nicht unwesentlich dadurch bestimmt, daß in einem bestimmten Regelfall an den den beiden Antriebsrädern zugeordneten Radbremszylindern 4; 4a ein Nachbremsen vermieden wird.

Die Druckfeder 45 im Aufstoßventil sorgt für eine bestimmte Schließ- und Dichtheitsfunktion der Ventilelemente 44, 45, 46, um den ersten Zylinderraum 39 vom zweiten Zylinderraum 40 während eines Blockierschutzregelzustandes zu trennen. Zwischen dem ersten Zylinderraum 39 des zweiten Zylinders 29 und dem zweiten Zylinderraum 33 des ersten Zylinders 27 ist ein bestimmter Führungsbereich 38 des Stiftes 37 in einem Gehäuse vorgesehen.

Will beim Anfahren eines der Räder seinen dem Vortrieb dienenden Zustand verlassen, so wird dies in bekannter Weise von einem Sensor erfaßt und durch ein Signal des elektronischen Steuergerätes an mindestens einem einem Antriebsrad zugeordnete Ventilanordnung weitergegeben. Die Radbremszylinder 4; 4a sind den Antriebsrädern zugeordnet und können einzeln und zusammen geregelt werden. Es wird nun die Wirkungsweise im Antriebsschupfregelfall am Radbremszylinder 4 entsprechend der Figur 1 beschrieben. Durch einen gesteuerten Umschaltvorgang werden dabei die zweite Ventilanordnung 6 in die Schließstellung 65 und die beiden Ventile 17a, 17b der dritten Ventilanordnung 17a, 17b in die Durchgangsstellungen 60, 66 gebracht. Es wird dabei für das eingeschaltete Pumpenelement 14 eine Saugleitung vom Mehrkreishauptzylinder 2 bis zum Pumpenelementeingang 20 und eine Druckleitung vom Pumpenelementausgang 13 über die geöffnete erste Ventilanordnung 7 bis zum Radbremszylinder 4 geschaltet. Der Mehrkreishauptzylinder 2 hat dabei zumindest eine Verbindung zum Nachfüllbehälter 1. Wird eine bestimmte Druckmodulation im Radbremszylinder 4 erforderlich, kann die erste Ventilanordnung 7 in die Druckhaltestellung 61 wie auch in die Druckabbaustellung 26 geschaltet werden. Um den dabei bei der Druckmodulation weiter erzeugbaren Bremsdruck im den Leitungen 10, 3 nicht zu hoch ansteigen zu lassen, kann durch eine bestimmte Taktansteuerung der zweiten Ventilanordnung 6 die erzeilbare Druckhöhe begrenzt werden.

Bei einer Ausgetaltung der ersten Ventilanordnung aus zwei 2/2-Ventilen 7a, 7b, wie im linken Bremskreis in Figur 1 gezeigt ist, sind die beiden Ventile 7a, 7b in der erforderlich werdenden Druckhaltephase in Schließstellung. Wird danach ein Druckabbau aus dem Radbremszylinder 4a erforderlich, schaltet das elektronische Steuergerät das zweite Ventil 7b in die Öffnungsstellung 26a.

Bei einer Verwendung der dritten Ventilanordnung 56 wird das Ventil für einen Antriebsschlupfregelvorgang in die Ventilstellung 58 ge schaltet, in der es mit seinem ersten Anschluß 67 mit der Pumpenelementeingangsseite 20 und mit deinem zweiten Anschluß 68 mit der zum Mehrkreishauptzylinder führenden Leitung 15 verbunden ist.

Die beiden Anschlüsse 67, 68 besitzen eine innerhalb der Ventilstellung 58 liegende Leitungsbrücke 69. Damit wird eine Druckmittelentnahme aus dem Mehrkreishauptzylinder 2 durch das Pumpenelement 14 möglich gemacht.

Soll eine bestimmte erste Ventilanordnung an einem Radbremszylinder ersetzt werden, so wird die in der Figur 2 gezeigt, einem Antriebsrad eine Zylinderanordnung aus zwei Zylindern 27, 29 vorgeschaltet. Im Antriebsschlupfregelfall des dem Radbremszylinder 4a zugeordneten Antriebsrades wird die zweite Ventilanordnung 6a in die Schließstellung 65a und die Ventile der dritten Ventilanordnung 18a, 18b werden in die Durchgangsstellung geschaltet. Das zugleich miteingeschaltete Pumpenelement 14a fördert Druckmittel aus dem Mehrkreishauptzylinder 2 in den zweiten Zylinderraum 40 des zweiten Zylinders 29 und durch das sich in Offenstellung befindende Aufstoßventil 44, 45, 46 in den ersten Zylinderraum 39 und von hier aus zu dem Radbremszylinder 4a. Muß ein bestimmter Druckwert im Radbremszylinder gehalten oder abgebaut werden, so ist für das jeweilige Erfordernis die zweite Ventilanordnung 6a getaktet ansteuerbar.

Während der Antriebsschlupfregelung des dem Radbremszylinder 4 zugeordneten Antriebsrades und der Antriebsschlupfregelung beider Antriebsräder wird Druckmittel während der Druckaufbauphase in den Radbremszylinder 4 gebracht und der dabei erforderliche Druck wird über die Abzweigung 34 der Bremsleitung 3 in dem ersten Zylinderraum 32 und über die Abzweigung 35 in den zweiten Zylinderraum 33 des ersten Zylinders 27 wirksam. Dieser Druck wirkt auch auf die in Richtung des zweiten Kolbens 30 beaufschlagete Fläche 70 des Stiftes 37, die so dimensioniert werden kann, daß in diesem Fall der Stift 37 nicht gegen den zweiten Kolben 30 bewegt wird.

Ist eine bestimmte Druckmodulation innerhalb des Radbremszylinders 4 erforderlich, so ist die erste Ventilanordnung 7; 7a, 7b während der Druckhaltephase in die Ventilstellung 61; 61a und in der Druckabbauphase in die Ventilstellung 26; 26a schaltbar.

Um den Druck in den an der Pumpenelementausgangsseite 13 angeschlossenen Leitungssystem und damit auch im ersten Zylinderraum 32 des ersten Zylinders 27 nicht unerwünscht ansteigen zu lassen, wird für das "Druckhalten" und für den "Druckabbau" die zweite Ventilanordnung 6; 6a getaktet angesteuert. Es bleibt dabei der im Radbremszylinder 4 und über die Abzweigung 35 im zweiten Zylinderraum 33 anstehende und geregelte Druck unwesentlich höher oder niedriger als der im ersten Zylinderraum 32 anstehende Druck. Dabei wird eine wesentliche Bewegung des ersten Kolbens 28 infolge einer bestimmten Druckdifferenz durch die Beaufschlagung der Kolbenseite 71 mit einem hohen Druck und die Beaufschlagung der Kolbenseite 36 mit einem niedrigen Druck vermie-den.

## Ansprüche

1. Blockierschutz- und Antriebsschlupfregelan-lage für Fahrzeuge, deren Rädern je ein über eine Bremsleitung mit einem Mehrkreishauptzylinder in Verbindung stehender Radbremszylinder zugeordnet ist, mit wenigstens einer einem der angetriebenen Räder zugeordneten und in der Bremsleitung liegenden ersten Ventilanordnung, die im Blockierschutz- und Antriebsschlupfregelfall Schaltstellungen zum Druckaufbau, Druckhalten und Druckabbau an einer Radbremse einnehmen kann, und einer wenigstens einem der Bremskreise zugeordneten zweiten Ventilanordnung zwischen dem Mehrkreishauptzylinder und der ersten Ventilanordnung, durch die die Verbindung zwischen dem Mehrkreishauptzylinder und der ersten Ventilanordnung in einem der Bremskreise nur im Antriebsschlupfregelfall steuerbar ist, und wenigstens einem selbstansaugenden Pumpenelement, durch das Druckmittel in die Bremsleitung zwischen die erste und die zweite Ventilanordnung pumpbar ist, dadurch gekennzeichnet, daß eine je einem nicht angetriebenen Rad in einem Bremskreis zugeordnete dritte Ventilanordnung vorgesehen ist und aus zwei Ventilen (17a, 17b; 18a, 18b) besteht, von denen das eine Ventil (17a, 18a) eine die zweite Ventilanordnung (6; 6a) umgehende Verbindung zu dem Radbremszylinder (5; 5a) des nicht angetriebenen Rades herstellen oder unterbinden kann und das andere Ventil (17b; 18b) in einer von der Bremsleitung zwischen diesem Radbremszylinder (5; 5a) und den einen Ventil (17a; 18a) abzweigenden und zur Eingangsseite (20, 20a) des Pumpenelements (14; 14a) führenden Verbindung liegt und im Antriebsschlupfregelfall beide Ventile (17a, 17b; 18a, 18b) offen sind.

2. Blockierschutz- und Antriebsschlupfregelanlage nach Anspruch 1, dadurch gekennzeichnet, daß die Ausgangsseite (13; 13a) des Pumpenelements (14; 14a) über ein Überdruckventil (12; 12a) mit dem Mehrkreishauptzylinder (2) verbindbar ist.

3. Blockierschutz- und Antriebsschlupfregelanlage nach Anspruch 1, dadurch gekennzeichnet, daß die zweite Ventilanordnung (6; 6a) und die dritte Ventilanordnung (17a, 17b; 18a, 18b) eines Bremskreises aus 2/2-Ventilen bestehen und im Blockierschutzregelfall während des Druckhaltens im Radbremszylinder (4, 4a; 5, 5a) sich die erste Ventilanordnung (7; 7a, 7b) und die dritte Ventilanordnung (17a, 17b; 18a, 18b) in Schließstellung befinden und während des Druckabbaues aus den Radbremszylindern (4, 4a; 5, 5a) die erste Ventilanordnung (7, 7a, 7b) und das andere Ventil (17b, 18b) der dritten Ventilanordnung (17a, 17b; 18a, 18b) in Offenstellung zur Eingangsseite (20; 20a) des Pumpenelementes (14; 14a) und das eine Ventil (17a; 18a) der dritten Ventilanordnung in Schließstellung gehalten werden und während des Antriebsschlupfregelfalles die dritte Ventilanordnung (17a, 17b; 18a, 18b) geöffnet wird und die erste Ventilanordnung (7; 7a, 7b) in der Druckhaltephase geschlossen und in der Druckabbauphase in eine den Radbremszylinder (4, 4a; 5, 5a) zur Eingangsseite (20; 20a) des Pumpenelementes (14; 14a) öffnende Stellung geschaltet wird.

4. Blockierschutz- und Antriebsschlupfregelanlage nach einem der vorhergehenden Ansprüche, dadurch gekennzeichnet, daß die erste Ventilanordnung (7) aus einem 3/3-Ventil besteht.

5. Blockierschutz- und Antriebsschlupfregelanlage nach einem der Ansprüche 1 bis 3, dadurch gekennzeichnet, daß die erste Ventilanordnung aus zwei 2/2-Ventilen (7a, 7b) besteht, die im Blockierschutzregelfall während des Druckhaltens im Radbremszylinder geschlossen sind und von denen das erste Ventil (7a) während des Druckabbaues geschlossen bleibt und das zweite Ventil (7b) öffnet und im Antriebs schlupfregelfall während des Druckhaltens beide geschlossen sind und von denen nur das zweite Ventil (7b) während des Druckabbaues vom Radbremszylinder (4a) zur Eingangsseite (20a) des Pumpenelements (14a) öffnet.

6. Blockierschutz- und Antriebsschlupfregelanlage nach einem der vorhergehenden Ansprüche, dadurch gekennzeichnet, daß die zweite Ventilanordnung (6; 6a) im Antriebsschlupfregelfall getaktet ansteuerbar ist.

7. Blockierschutz- und Antriebsschlupfregelanlage nach einem der vorhergehenden Ansprüche, dadurch gekennzeichnet, daß die dem angetriebenen Rad zugeordnete erste Ventilanordnung des einen Bremskreises durch eine Zylinderanordnung mit einem ersten Zylinder (27) sowie einem ersten Kolben (28) und einem zweiten Zylinder (29) sowie einem zweiten Kolben (30) gebildet wird und der erste Kolben (28) im ersten Zylinder (27) einen ersten Zylinderraum (32) von einem zweiten Zylinderraum (33) trennt und an einem Anschlag (31) anliegt, wobei der erste Zylinderraum (32) mit der Bremsleitung (3) des anderen Bremskreises über eine Abzweigung (34) zwischen der ersten Ventilanordnung (7; 7a, 7b) des angetriebenen Rades und der zweiten Ventilanordnung (6) und der zweiten Zylinderraum (33) über eine Abzweigung (35) zwischen der ersten Ventilanordnung (7; 7a, 7b) des angetriebenen Rades und dem Radbremszylinder (4) in Verbindung stehen und dem Anschlag (31) abgewandt am ersten Kolben (28) ein Stift (37) angreift, der in den zweiten Zylinder (29) ragend den zweiten Kolben (30) berührt, der den zweiten Zylinder (29) in einen ersten Zylinderraum (39) und einen zweiten Zylinderraum (40) unterteilt, welcher mit der Bremsleitung (3a) des zweiten Bremskreises verbunden ist, eine den zweiten Kolben (30) in Richtung zum Stift (37) hin beaufschlagende Feder (42) aufnimmt und über ein Aufstoßventil (44, 45, 46) mit dem ersten Zylinderraum (39) verbindbar ist, von dem ein Bremsleitungsabschnitt (42) zum Radbremszylinder (4a) führt, wobei die zweiten Ventilanordnungen (6; 6a) jedes Bremskreises im Antriebsschlupfregelfall derart getaktet ansteuerbar sind, daß die Kolben (28, 30) ihre Position im wesentlichen beibehalten.

8. Blockierschutz- und Antriebsschlupfregelanlage für Fahrzeuge, deren Rädern je ein über eine Bremsleitung mit einem Mehrkreishauptzylinder in Verbindung stehender Radbremszylinder zugeord-

net ist, mit wenigstens einem der angetriebenen Räder zugeordneten und in der Bremsleitung liegenden ersten Ventilanordnung, die im Blockierschutz- und Antriebsschlupfregelfall Schaltstellungen zum Druckaufbau, Druckhalten und Druckabbau an einer Radbremse einnehmen kann, und einer wenigstens einem der Bremskreise zugeordneten zweiten Ventilanordnung zwischen dem Mehrkreishauptzylinder und der ersten Ventilanordnung, durch die die Verbindung zwischen dem Mehrkreishauptzylinder und der ersten Ventilanordnung in einem der Bremskreise nur im Antriebsschlupfregelfall steuerbar und wenigstens einem selbstansaugenden Pumpenelement, durch das Druckmittel in die Bremsleitung zwischen die erste und die zweite Ventilanordnung pumpbar ist, dadurch gekennzeichnet, daß eine je einem nicht angetriebenen Rad im einem der Bremskreise zugeordnete dritte Ventilanordnung (56) vorgesehen und als 3/3-Ventil ausgebildet ist, die im Antriebsschlupfregelfall in eine Stellung steuerbar ist, in der eine die zweite Ventilanordnung (6; 6a) umgehende Verbindung zur Eingangsseite (20; 20a) des Pumpenelements (14; 14a) geöffnet wird.

9. Blockierschutz- und Antriebsschlupfregelanlage nach Anspruch 8, dadurch gekennzeichnet, daß die zweite Ventilanordnung (6; 6a) im Antriebsschlupfregelfall getaktet ansteuerbar ist.

10. Blockierschutz- und Antriebsschlupfregelanlage nach Anspruch 9, dadurch gekennzeichnet, daß die dem angetriebenen Rad zugeordnete erste Ventilanordnung des einen Bremskreises durch eine Zylinderanordnung mit einem ersten Zylinder (27) sowie einem ersten Kolben (28) und einem zweiten Zylinder (29) sowie einem zweiten Kolben (30) gebildet wird und der erste Kolben (28) im ersten Zylinder (27) einen ersten Zylinderraum (32) von einem zweiten Zylinderraum (33) trennt und an einem Anschlag (31) anliegt, wobei der erste Zylinderraum (32) mit der Bremsleitung (3) des anderen Bremskreises über eine Abzweigung (34) zwischen der ersten Ventilanordnung (7; 7a, 7b) des angetriebenen Rades und der zweiten Ventilanordnung (6) und der zweite Zylinderraum (33) über eine Abzweigung (35) zwischen der ersten Ventilanordnung (7; 7a, 7b) des angetriebenen Rades und dem Radbremszylinder (4) in Verbindung stehen und dem Anschlag (31) abgewandt am ersten Kolben (28) ein Stift (37) angreift, der in den zweiten Zylinder (29) ragend den zweiten Kolben (30) berührt, der den zweiten Zylinder (29) in einen ersten Zylinderraum (39) und einen zweiten Zylinderraum (40) unterteilt, welcher mit der Bremsleitung (3a) des zweiten Bremskreises verbunden ist, eine den zweiten Kolben (30) in Richtung zum Stift (37) hin beaufschlagende Feder (42) aufnimmt und über ein Aufstoßventil (44, 45. 46) mit dem ersten Zylinderraum (39) verbindbar ist, von dem ein Bremsleitungsabschnitt (62) zum Radbremszylinder (4a) führt, wobei die zweiten Ventilanordnungen (6; 6a) jedes Bremskreises im Antriebsschlupfregelfall derart getaktet ansteuerbar sind, daß die Kolben (28, 30) ihre Position im wesentlichen beibehalten.

FIG. 1

FIG. 2

FIG. 3